# EUROPÄISCHE PATENTSCHRIFT

(11) **EP 2 215 434 B1**
(45) Veröffentlichungstag und Bekanntmachung des Hinweises auf die Patenterteilung: **01.06.2011**
(21) Anmeldenummer: 08853228.8
(22) Anmeldetag: 20.10.2008
(51) Int. Cl.: G01F 1/684, F15D 1/00

(54) **SENSORANORDNUNG ZUR BESTIMMUNG EINES PARAMETERS EINES FLUIDEN MEDIUMS**
SENSOR APPARATUS TO DETERMINE A PARAMETER OF A FLUID MEDIUM
SYSTÈME DE DÉTECTION POUR DÉTERMINER UN PARAMÈTRE D'UN FLUIDE

(30) Priorität: 26.11.2007 DE 102007056888
(43) Veröffentlichungstag der Anmeldung: 11.08.2010
(73) Patentinhaber: Robert Bosch GmbH, 70442 Stuttgart (DE)
(72) Erfinder: RENNINGER, Erhard, 71706 Markgroeningen (DE); KONZELMANN, Uwe, 71679 Asperg (DE); GMELIN, Christoph, 70597 Stuttgart (DE)
(86) Internationale Anmeldenummer: PCT/EP2008/064111
(87) Internationale Veröffentlichungsnummer: WO 2009/068368

(56) Entgegenhaltungen:
- DE-A1- 3 320 753
- DE-A1- 19 647 081
- DE-A1- 19 913 654
- JP-A- 10 048 021
- JP-A- 55 122 120

## Beschreibung

### Stand der Technik

Die Erfindung geht aus von Vorrichtungen zur Messung wenigstens eines Parameters eines strömenden fluiden Mediums, insbesondere eines durch ein Strömungsrohr strömenden fluiden Mediums, wie sie aus verschiedenen Bereichen der Technik bekannt sind. So müs-sen bei vielen Prozessen, beispielsweise auf dem Gebiet der Verfahrenstechnik, der Chemie oder des Maschinenbaus, definiert fluide Medien, insbesondere Gasmassen (z. B. eine Luftmasse) mit bestimmten Eigenschaften (beispielsweise Temperatur, Druck, Strömungsgeschwindigkeit, Massenstrom, Volumenstrom etc.) zugeführt werden. Hierzu zählen insbesondere Verbrennungsprozesse, welche unter geregelten Bedingungen ablaufen.

Ein wichtiges Anwendungsbeispiel ist die Verbrennung von Kraftstoff in Verbrennungskraftmaschinen von Kraftfahrzeugen, insbesondere mit anschließender katalytischer Abgasreinigung, bei denen geregelt eine bestimmte Luftmasse pro Zeiteinheit (Luftmassenstrom) zugeführt werden muss. Zur Messung des Luftmassendurchsatzes werden dabei verschiederie Typen von Sensoren eingesetzt. Ein aus dem Stand der Technik bekannter Sensortyp ist der so genannte Heißfilmluftmassenmesser (HFM), welcher beispielsweise in DE 196 01 791 A1 in einer Ausführungsform beschrieben ist. Bei derartigen Heißfilmluft-massenmessern wird üblicherweise ein Sensorchip eingesetzt, welcher eine dünne Sensormembran aufweist, beispielsweise ein Silicium-Sensorchip. Auf der Sensormembran ist typischerweise mindestens ein Heizwiderstand angeordnet, welcher von zwei oder mehr Temperaturmesswiderständen (Temperaturfühlern) umgeben ist. In einem Luftstrom, welcher über die Membran geführt wird, ändert sich die Temperaturverteilung, was wiederum von den Temperaturmesswiderständen erfasst werden kann und mittels einer Ansteuer- und Auswertungsschaltung ausgewertet werden kann. So kann, zum Beispiel aus einer Widerstandsdifferenz der Temperaturmesswiderstände, ein Luftmassenstrom bestimmt werden. Verschiedene andere Varianten dieses Sensortyps sind aus dem Stand der Technik bekannt. Die vorliegende Erfindung ist zudem nicht auf den beschriebenen Sensortyp des Heißfilmluftmassenmessers beschränkt, sondern kann grundsätzlich für die meisten Arten von Sensoren, die als fest installierte Sensoren oder als Steckfühler in einem strömenden Medium eingesetzt werden, genutzt werden.

Nachteilig an den aus dem Stand der Technik beschriebenen Steckfühlerkonstruktionen ist jedoch, dass die beschriebenen Steckfühler in vielen Fällen im Ansaugtrakt Probleme bezüglich eines Strömungswiderstand-bedingten Druckabfalls verursachen. Dies bedeutet insbesondere, dass die Signalreproduzierbarkeit der Signale derartiger Sensoren nicht optimal ist.

Viele Sensoren, insbesondere Heißfilmluftmassenmesser, werden in der Praxis mit einem Gitter oder einer Gitterkombination ausgerüstet. Diese Gitter können beispielsweise in ein Strömungsrohr integriert werden und stehen üblicherweise einige Zentimeter stromauf des Steckfühlers bzw. Sensors in der Strömung und haben die Aufgabe, das Geschwindigkeitsprofil in dem Strömungsrohr zu vergleichmäßigen. Weiterhin haben derartige Gitter die Aufgabe, evtl. vorhandenen Drall aus der Strömung zu nehmen. Die ausgleichende Wirkung des Gitters wird durch seine bremsende Wirkung auf die Strömung erzielt. Gleichzeitig wird eine kleinskalige Turbulenz erzeugt, die schnelles und langsames Fluid vermischt und so zu einem Geschwindigkeitsausgleich über den gesamten Rohrquerschnitt beiträgt. So wird erreicht, dass die Kennlinie des Sensors (zum Beispiel ein Zusammenhang zwischen Luftmasse und Ausgangsfrequenz oder Ausgangsspannung) nahezu unabhängig vom Geschwindigkeitsprofil der zuströmenden Luft ist.

Ein Beispiel einer derartigen Vorrichtung mit einem Gitter ist aus DE 196 47 081 A1 bekannt. Im Gegensatz zu bekannten Gittern, bei denen gleichgroße, äquidistante Strömungsöffnungen vorgesehen sind, wird bei diesem Gitter vorgeschlagen, Strömungsöffnungen mit unterschiedlichem Durchströmquerschnitt vorzusehen. Die Durchströmquerschnitte sind dabei der Zuströmung angepasst, um stromabwärts des Gitters eine Strömung mit im Wesentlichen gleichmäßiger Geschwindigkeitsverteilung zu bewirken.

Ungünstigerweise zeigen jedoch viele Sensoren, insbesondere viele Luftmassenmesser, in Kombination mit bekannten Gitterkonstruktionen in manchen Luftmassenbereichen Kennlinien, deren Reproduzierbarkeit Raum für weitere Verbesserungen lässt. Ursache hierfür ist in der Regel eine Instabilität der Strömung unmittelbar hinter den Gitterstreben. Im Nachlauf der Gitterstreben bilden sich Ablösegebiete und Unregelmäßigkeiten im Geschwindigkeitsprofil aus, welche prinzipiell instabil sind, so dass in der Regel auch die Messwerte der stromabwärts der Gitterkonstruktion angeordneten Sensoren instabil sein können.

### Offenbarung der Erfindung

Erfindungsgemäß werden daher eine Sensoranordnung zur Bestimmung wenigstens eines Parameters eines mit einer Hauptströmungsrichtung strömenden fluiden Mediums sowie ein Strömungsrohrsegment für den Einsatz in einer derartigen Sensoranordnung vorgeschlagen, welche die Nachteile bekannter Sensoranordnungen bzw. Strömungsrohrsegemente vermeiden. Insbesondere weist die vorgeschlagene Sensoranordnung eine stabilere Strömung im Bereich eines Sensors, insbesondere im Nachlauf eines Gitters und damit eine höhere Reproduzierbarkeit auf. Auf sonstige strömungsstabilisierende Maßnahmen, wie beispielsweise zusätzliche Drahtgitter, kann vorzugsweise verzichtet werden, so dass sich auch die Herstellungskosten für die vorgeschlagene Sensoranordnung gegenüber herkömmlichen Sensoranordnungen verringern lassen. Insgesamt weist die Sensoranordnung eine hohe Signalqualität im Vergleich zu herkömmlichen Sensoranordnungen auf, insbesondere ein verbessertes Signalrauschen.

Die Sensoranordnung ist grundsäztlich geeignet für eine Vielzahl der eingangs genannten Sensoren und Messprinzipien sowie für eine Vielzahl fluider Medien (beispielsweise Gase und Flüssigkeiten). Es lassen sich prinzipiell eine Vielzahl möglicher physikalischer und/oder chemischer Parameter messen, wie beispielsweise Druck, Temperatur, Dichte, Massendurchsatz, Volumendurchsatz oder ähnliches. Dementsprechend weist die Sensoranordnung mindestens einen Sensor auf, welcher an die Art des bzw. der zu messenden Parameter angepasst ist. Im Folgenden sei, ohne weitere mögliche Ausgestaltungen der Erfindung zu beschränken, angenommen, dass der Sensor einen Heißfilmluftmassenmesser umfasst, wie er beispielsweise in der eingangs genannten DE 196 01 791 A1 oder in weiteren der zitierten Schriften des Standes der Technik beschrieben wird.

Grundsätzlich kann das fluide Medium frei in der Hauptströmungsrichtung strömen, wobei unter der Hauptströmungsrichtung die lokale Strömungsrichtung des Mediums im Bereich der Sensoranordnung zu verstehen ist. Hierbei sollen jedoch lokale Unregelmäßigkeiten, wie beispielsweise Verwirbelungen, außer Betracht bleiben, so dass unter der Hauptströmungsrichtung die Haupttransportrichtung, in welcher das fluide Medium im Bereich der Sensoranordnung transportiert wird, zu verstehen ist. Vorzugsweise strömt das fluide Medium durch ein Strömungsrohr, wobei die Sensoranordnung beispielsweise ein Strömungsrohrsegment umfassen kann, mit mindestens einem Gehäuse, in welches (beispielsweise mittels mindestens einer Aufnahme) der mindestens eine Sensor eingebracht werden kann.

Die Sensoranordnung weist weiterhin mindestens ein quer zur Hauptströmungsrichtung angeordnetes Gitter mit mehreren Streben auf. Vorzugsweise sind mehrere derartiger Streben vorgesehen, welche beispielsweise parallel und/oder in von 0° verschiedenen Winkeln zueinander orientiert sein können. Auch ein Gitter mit einander kreuzenden Streben, beispielsweise analog zum oben beschriebenen Stand der Technik, ist denkbar. Vorzugsweise ist das Gitter Teil des besagten Strömungsrohrsegments, beispielsweise in Form eines herausnehmbaren Teils dieses Strömungsrohrsegments. Unter dem Begriff "quer zur Strömungsrichtung" ist dabei im vorliegenden Fall vorzugsweise ein Winkel von 90° zwischen den Streben und der Hauptströmungsrichtung zu verstehen, wobei jedoch auch Abweichungen von 90° denkbar sind, beispielsweise Abweichungen um nicht mehr als 20°. Insofern kann das Gitter beispielsweise den eingangs zitierten Stand der Technik, beispielsweise der in DE 196 47 081 A1 beschriebenen Anordnung, entsprechen.

Im Gegensatz zum Stand der Technik beruht die vorliegende Erfindung auf der Erkenntnis, dass sich die genannten Instabilitäten der Strömung unmittelbar hinter den Gitterstreben in Ablösegebieten und Einbuchtungen ("Dellen") im Geschwindigkeitsprofil begründen. Insbesondere bei Gittern mit gekreuzten Gitterstreben überlagern sich diese Unregelmäßigkeiten in den Geschwindigkeitsprofilen an den Gitterkreuzungspunkten zu lokalen Minima im Geschwindigkeitsprofil stromab des Gitters, die sich üblicherweise über eine Strecke von 5 bis 10-mal der Gittertiefe in Hauptströmungsrichtung auswirken. Diese lokalen Minima gehören zu den Ablösegebieten, die sich im Nachlauf der Gitterkreuzungspunkte bilden. Diese Totwasserzonen sind instabil und reagieren sehr empfindlich auf kleinste Veränderungen der Zuströmbedingungen und ändern auf Grund dieser Veränderungen beispielsweise ihre Form, Größe und Lage und beeinflussen auf diese Weise die Kennlinien des Sensorelements bzw. deren Reproduzierbarkeit. Zusätzlich sind diese Zonen stark instationär, verstärken also das Signalrauschen der Sensorelemente.

Ein Grundgedanke der vorliegenden Erfindung besteht daher darin, die Ablösegebiete im Nachlauf des Gitters, insbesondere im Bereich der Gitterkreuzungspunkte, zu verkleinern und zu stabilisieren, um das Signalrauschen zu reduzieren und die Signalreproduzierbarkeit zu verbessern. Zu diesem Zweck wird vorgeschlagen, dass die Strebe eine im Wesentlichen in die Hauptströmungsrichtung gerichtete Strebentiefe aufweist, wobei die Strebe mindestens eine Aussparung aufweist, in welcher die Strebentiefe reduziert ist. Unter "im Wesentlichen in die Hauptströmungsrichtung gerichtet" ist dabei eine Strebentiefe zu verstehen, welche vorzugsweise parallel zur Hauptströmungsrichtung orientiert ist, wobei jedoch auch leichte Abweichungen von dieser Parallelität, beispielsweise um nicht mehr als 50°, vorzugsweise nicht mehr als 20° und besonders bevorzugt nicht mehr als 5°, tolerierbar sind.

Die erfindungsgemäße Aussparung hat grundsätzlich zwei Effekte zur Folge. So wird durch eine lokale Reduktion des Wandeinflusses das Geschwindigkeitsprofil homogener und stabiler. Die Ablösegebiete hinter den Gitterstreben werden kleiner. Weiterhin werden in den vorgeschlagenen Aussparungen in den Streben Längswirbel erzeugt, die für einen verstärkten Impulsaustausch zwischen langsamem fluiden Medium (in der Ablösezone) und schnellem fluiden Medium (außerhalb der Ablösezone) hinter den Streben sorgen. Auch hierdurch werden die Ablösegebiete verkleinert und stabilisiert, und das Geschwindigkeitsprofil wird homogener ausgestaltet.

Die mindestens eine Aussparung ist vorzugsweise an einer bezüglich der Hauptströmungsrichtung stromabwärts angeordneten Hinterkante der Strebe angeordnet. Aussparungen an der Vorderkante der Strebe wirken grundsätzlich ähnlich, erzeugen jedoch selbst in der Regel Störungen und sind in der Regel weniger effizient als die vorgeschlagene Variante der Aussparung an der Hinterkante.

Bevorzugt sind dabei rechtwinklige Aussparungen, also beispielsweise Aussparungen in Form eines rechteckigen Profils in den Streben. Grundsätzlich können die Aussparungen jedoch auch andere Profile aufweisen, beispielsweise trapezförmige Aussparungen mit seitlichen Winkeln, die von 90° abweichen. So sind beispielsweise trapezförmige Profile mit einem Trapezwinkel zwischen 90° (rechteckiges Profil) und 30° in ihrer Funktion rechtwinkligen Aussparungen vergleichbar und können insbesondere auch Vorteile bei einer Fertigung der Sensoranordnung, insbesondere des Gitters, aufweisen. Grundsätzlich sind auch abgerundete Profile, beispielsweise rechteckige und/oder trapezförmige Profile, welche im Kantenbereich abgerundet sind, denkbar. Es sei darauf hingewiesen, dass die Profile der Aussparungen, sofern mehrere Aussparungen im Gitter vorgesehen sind, nicht notwendigerweise allesamt identisch sein müssen, sondern dass die Ausgestaltung der Aussparungen auch über das Gitter hinweg variieren kann.

Die Tiefe der Aussparungen, d.h. die maximale Verringerung der Strebentiefe in den Aussparungen, liegt vorzugsweise im Bereich von ca. 50% der Gittertiefe, d.h. vorzugsweise in Hauptströmungsrichtung. Darüber hinaus sind jedoch auch andere Gittertiefen möglich, beispielsweise Gittertiefen im Bereich zwischen 10% und 80% der Strebentiefe.

Die Aussparungen können grundsätzlich an beliebigen Stellen des Gitters angeordnet sein. Wie oben beschrieben, ist es jedoch besonders bevorzugt, wenn das Gitter mindestens zwei sich an mindestens einem Kreuzungspunkt schneidende Streben aufweist, vorzugsweise vier oder mehr Streben. Die sich kreuzenden Streben können grundsätzlich in beliebigen, von 0° verschiedenen Winkeln zueinander angeordnet sein, wobei jedoch Winkel im Bereich von 90° bevorzugt sind. Auch Abweichungen von 90° sind jedoch möglich, beispielsweise Abweichungen um nicht mehr als 40°. Auf diese Weise kann durch die sich kreuzenden Streben ein Maschengitter ausgebildet sein, beispielsweise mit einer Maschenweite von 4 bis 7 mm, wobei jedoch auch andere Ausgestaltungen der Maschen möglich sind. Für die Strebentiefe sind grundsätzlich ebenfalls verschiedene Werte möglich, wobei typischerweise Werte im Bereich zwischen 5 und 10 mm verwendet werden.

Im Fall eines derartigen Maschengitters mit mindestens zwei einander kreuzenden Streben ist es besonders bevorzugt, wenn die mindestens eine Aussparung im Bereich des mindestens einen Kreuzungspunktes angeordnet ist. Wie oben beschrieben, bewirkt dies eine besonders wirksame Stabilisierung der Strömung in diesen strömungstechnisch kritischen Bereichen der Kreuzungspunkte. Dabei können Aussparungen an einer der einander kreuzenden Streben oder an beiden der einander kreuzenden Streben im Bereich der Kreuzungspunkte vorgesehen sein. Grundsätzlich können alle der Kreuzungspunkte mit einer derartigen Aussparung versehen sein, wobei jedoch auch Ausführungen möglich sind, bei welchen nur einige und nicht alle der Kreuzungspunkte derart mit Aussparungen versehen sind.

Besonders bevorzugt ist es, die mindestens eine Aussparung, sei sie nun an einem Kreuzungspunkt und/oder an einer Strebe außerhalb eines Kreuzungspunktes angeordnet, stromaufwärts vor einem Messbereich des Sensors anzuordnen. Auf diese Weise entfaltet die Aussparung ihre stabilisierende Wirkung insbesondere im Bereich dieses Messbereichs. So kann der Messbereich beispielsweise unmittelbar ein Messbereich eines Sensorelements (z.B. eines Sensorchips zur Erfassung des mindestens einen Parameters) umfassen. Im Fall eines Heißfilmluftmassenmessers, welcher üblicherweise einen in die Strömung hineinragenden Messfinger mit einem in dem Messfinger angeordneten Messkanal aufweist, ist es besonders bevorzugt, die Aussparung stromaufwärts eines Einlasses dieses Messkanals anzuordnen. Besonders bevorzugt ist es, wenn die mindestens eine Aussparung im Bereich einer Projektion des Messbereiches entlang der Hauptströmungsrichtung auf das Gitter angeordnet ist, so dass die mindestens eine Aussparung ihre Wirkung im Bereich des Messbereichs entfaltet.

Die mindestens eine Strebe ist vorzugsweise mit einer der Hauptströmungsrichtung entgegenweisenden abgerundeten Vorderkante ausgestaltet. Die Hinterkante hingegen kann, insbesondere zur Ausbildung von Wirbeln, scharfkantig ausgebildet sein und kann beispielsweise eine im Wesentlichen senkrecht zur Hauptströmungsrichtung orientierte ebene Fläche aufweisen.

Wie oben beschrieben, wird neben der Sensoranordnung ein Strömungsrohrsegment für den Einsatz in einer Sensoranordnung in einer der beschriebenen Ausführungsformen vorgeschlagen. Für die Ausgestaltung der Sensoranordnung kann daher weitgehend auf die obige Beschreibung verwiesen werden. Das Strömungsrohrsegment umfasst mindestens ein Gehäuse mit mindestens einer Aufnahme zum Einbringen des Sensors. Bezüglich der möglichen Ausgestaltungen des Sensors kann wiederum weitgehend auf die obige Beschreibung verwiesen werden. Besonders bevorzugt ist es, wenn der Sensor als Messfinger ausgestaltet ist. Die Aufnahme kann derart ausgestaltet sein, dass der Sensor fest in der Aufnahme installiert ist und/oder kann derart ausgestaltet sein, dass der Sensor austauschbar (beispielsweise als austauschbarer Steckfühler) in die Aufnahme einbringbar ist. Beide Varianten sind möglich. Die Aufnahme kann, wie ebenfalls aus dem Stand der Technik bekannt, zusätzliche Strömungsleitelemente umfassen, beispielsweise eine abgerundete, stromaufwärts des Sensors angeordnete Anströmkante und/oder Strömungsleitelemente. Das Strömungsrohrsegment kann darüber hinaus weitere Leitelemente umfassen.

Weiterhin umfasst das Strömungsrohrsegment mindestens ein quer zur Hauptströmungsrichtung angeordnetes Gitter mit mehreren Streben. Für die Ausgestaltung dieses Gitters kann weitgehend auf die obige Beschreibung verwiesen werden. Diese mindestens eine Strebe weist mindestens eine Aussparung auf, in welcher die Strebentiefe reduziert ist. Das Gitter kann als auswechselbares Teil des Strömungsrohrsegments ausgestaltet sein und kann auf diese Weise beispielsweise in einem separaten Herstellprozess (z.B. einem Spritzgießprozess) hergestellt werden. Das Strömungsrohrsegment kann darüber hinaus weitere Elemente umfassen, beispielsweise Befestigungselemente, mittels derer das Strömungsrohrsegment in einen Abgasstrang einer Brennkraftmaschine eingebracht und dort fixiert werden kann.

### Kurze Beschreibung der Zeichnungen

Ausführungsbeispiele der Erfindung sind in den Zeichnungen dargestellt und in der nachfolgenden Beschreibung näher erläutert. Es zeigen
- Figuren 1A und 1B: verschiedene Darstellungen eines möglichen Ausführungsbeispiels einer Sensoranordnung;
- Figur 2: eine schematische Darstellung des Verlaufs der Geschwindigkeitspro- file vor und nach einem in den Figuren 1A und 1B dargestellten Gitter;
- Figur 3: ein Ausführungsbeispiels eines Gitters mit Aussparungen im Bereich der Kreuzungspunkte;
- Figur 4: ein Ausführungsbeispiel einer Strebe mit einer Aussparung; und
- Figur 5: eine perspektivische Teildarstellung eines Gitters mit einer Vielzahl von Kreuzungspunkten mit Aussparungen.

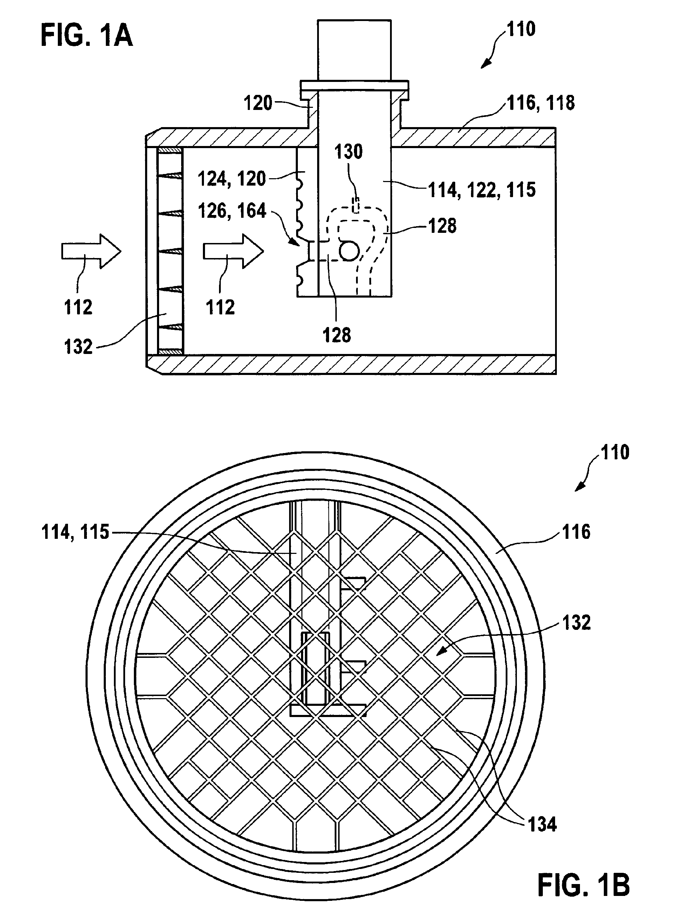

In den Figuren 1A und 1B ist eine Sensoranordnung 110 dargestellt, wie sie aus dem Stand der Technik bekannt ist, welche beispielsweise kommerziell erhältlich ist (z.B. in Form eines heißfilmluftmassenmessers vom Typ "HFM7" der Robert Bosch GmbH) und welche im Rahmen der vorliegenden Erfindung erfindungsgemäß modifiziert werden kann. Dabei zeigt Figur 1A eine Schnittdarstellung der Sensoranordnung 110 von der Seite, wohingegen in Figur 1B die Sensoranordnung 110 in Blickrichtung von vorne, entlang einer Hauptströmungsrichtung 112 eines strömenden fluiden Mediums, dargestellt ist.

Für den Aufbau der Sensoranordnung 110 kann weitgehend auf den Stand der Technik verwiesen werden. Die Sensoranordnung 110 ist in diesem Ausführungsbeispiel als Heißfilmluftmassenmesser-Sensoranordnung ausgestaltet und weist einen Heißfilmluftmassenmesser 114 auf.

Die Sensoranordnung 110 umfasst eine Strömungsrohrsegment 116, mit einem Gehäuse 118. Das Gehäuse 118 weist eine Aufnahme 120 auf, in welche ein Messfinger 122 des Heißfilmluftmassenmessers 114 eingesteckt werden kann. Die Aufnahme 120 ist dabei derart ausgestaltet, dass diese anströmseitig des Messfingers 122 eine Anströmkante 124 umfasst, für deren Ausgestaltung beispielsweise wiederum auf den Stand der Technik verwiesen werden kann. In der Anströmkante 124 ist ein Einlass 126 in Form einer Öffnung eingelassen. Im Messfinger 122 schließt sich an diesen Einlass 126 ein Strömungskanal 128 an, in welchem ein Sensorelement 130 angeordnet ist. Für die Ausgestaltung des Strömungskanals 128 und des Sensorelements 130, welche die Funktionalität des Heißfilmluftmassenmessers 114 bedingen, kann beispielsweise wiederum auf den Stand der Technik verwiesen werden. Sämtliche Elemente sind in den Figuren 1A und 1B nur schematisch angedeutet.

Wie insbesondere in Figur 1B erkennbar ist, weist das Strömungsrohrsegment 116 der Sensoranordnung 110 weiterhin ein stromaufwärts des Messfingers 122 angeordnetes Gitter 132 auf. Dieses Gitter 132 ist im vorliegenden Ausführungsbeispiel als Maschengitter mit einer Vielzahl einander im Wesentlichen senkrecht kreuzenden Streben 134 ausgestaltet. Diese Streben 134 kreuzen sich an einer Vielzahl von Kreuzungspunkten 136. Das Gitter kann beispielsweise als rundes, aus dem Strömungsrohrsegment 116 herausnehmbares Einzelteil ausgestaltet sein, wofür beispielsweise in dem Strömungsrohrsegment 116 einlassseitig eine Nut für die Aufnahme des Gitters 132 vorgesehen sein kann. Das Gitter 132 sowie das Strömungsrohrsegment 116 und Teile des Messfingers 122 können beispielsweise ganz oder teilweise als Kunststoffbauteile ausgestaltet sein, und können beispielsweise als Werkstoff ein Polyamid und/oder ein Polybutylenterephthalat umfassen, beispielsweise mit einer Glasfaserfüllung von 30%.

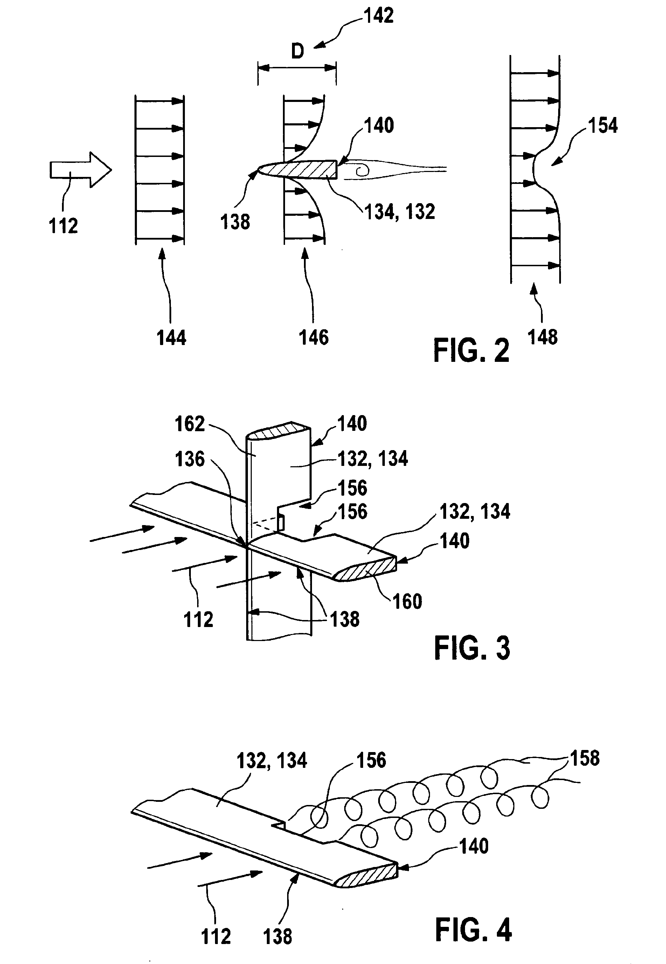

In Figur 2 ist eine einzelne Gitterstrebe 134 des Gitters 132 in einer Schnittdarstellung gezeigt. Die Strebe 134 weist eine in diesem Fall abgerundete Vorderkante 138 und eine bezüglich der Vorderkante 138 stromabwärts hinsichtlich der Hauptströmungsrichtung 112 angeordnete Hinterkante 140 auf. Die Hinterkante 140 ist in diesem Ausführungsbeispiel im Wesentlichen senkrecht zur Hauptströmungsrichtung 112 orientiert. Die Erstreckung der Strebe 134 zwischen Vorderkante 138 und Hinterkante 140 wird als Strebentiefe D bezeichnet und ist in Figur 2 symbolisch mit der Bezugsziffer 142 bezeichnet. Diese Erstreckung bzw. Strebentiefe ist im Wesentlichen parallel zur Hauptströmungsrichtung 112 orientiert.

In der Darstellung in Figur 2 sind Geschwindigkeitsprofile der Strömung des fluiden Mediums dargestellt, anhand derer die Problematik der Streben 134 verdeutlicht werden soll. So ist symbolisch ein Geschwindigkeitsprofil 144 vor Anströmung der Strebe 134 bzw. des Gitters 132 gezeigt, ein Geschwindigkeitsprofil 146 im Bereich des Gitters 132 und ein Geschwindigkeitsprofil 148 stromabwärts des Gitters 132.

Dabei ist zunächst zu erkennen, dass aus dem ursprünglich (beispielsweise im Bereich der Mitte des Strömungsrohrs des Strömungsrohrsegments 116) gleichförmigen Ausgestaltung des Geschwindigkeitsprofils 144 im Bereich 146 des Gitters 132 bzw. der Strebe 134 eine nahezu vollständige Abbremsung des fluiden Mediums erfolgt. Hinter der Strebe 132 bildet sich ein Ablösegebiet 152, welches zu Fluktuationen und Instabilitäten neigt. Im Bereich 148 hinter dem Gitter 132 macht sich diese Abbremsung an den Gitterstreben 132 noch in einer Entfernung von 5 bis 10-mal der Strebentiefe D bemerkbar. So ist in Figur 2 zu erkennen, dass in dem Bereich des strömenden fluiden Mediums, welcher die Strebe 134 umströmt hat, noch in einiger Entfernung hinter der Strebe 132 ein lokales Minimum 154 auftritt. Diese lokalen Minima 154 gehören zu den Ablösegebieten 140, welche sich im Nachlauf der Streben 132, insbesondere im Bereich der Kreuzungspunkte 136, ausbilden.

In den Figuren 3 bis 5 sind hingegen verschiedene erfindungsgemäße Ausgestaltungen des Gitters 132 bzw. der Streben 134 in perspektivischer Detaildarstellung gezeigt. So zeigt Figur 4 ein Ausführungsbeispiel des Gitters 132, bei welchem an der Hinterkante 140 eine Aussparung 156 vorgesehen ist. Diese Aussparung 156, welche im vorliegenden Ausführungsbeispiel als rechteckige Aussparung ausgestaltet ist, erzeugt stromabwärts der Strebe 134 Längswirbel 158, welche den oben beschriebenen Effekt des Impulsaustauschs zwischen langsamen Fluid und schnellem Fluid, und damit einen schnelleren Abbau des lokalen Minimums 154 im Geschwindigkeitsprofil 148, bewirken.

Wie oben ausgeführt, ist es dabei besonders günstig, die Aussparungen 156 im Bereich der Kreuzungspunkte 136 zweier Streben 134 anzuordnen. Ein derartiges Ausführungsbeispiel eines Gitters 132 ist in Figur 3 dargestellt. Hierbei ist zu erkennen, dass eine erste Strebe 160 und eine zweite Strebe 162 sich an einem Kreuzungspunkt 136 vorzugsweise rechtwinkling schneiden. Jede der beiden Streben 160, 162 weist, symmetrisch um den Kreuzungspunkt 136, an ihren Hinterkanten 140 Aussparungen 156 auf.

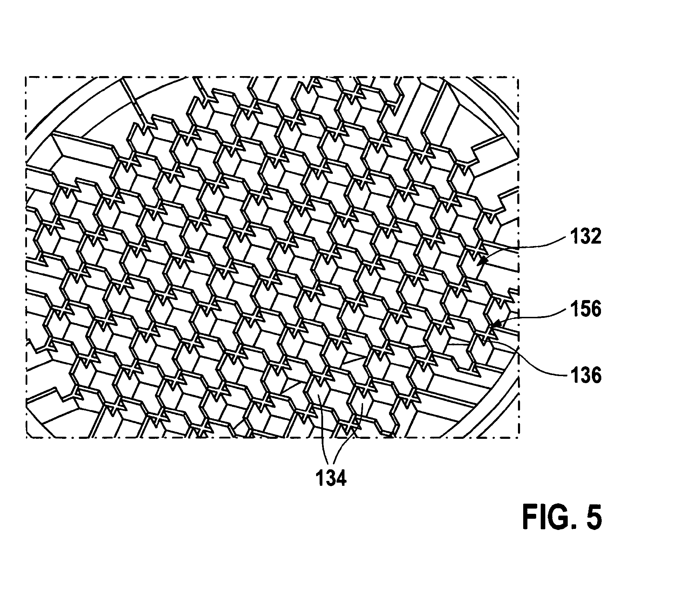

In Figur 5 ist schließlich eine perspektivische Darstellung in Draufsicht (mit Blickrichtung in Figur 1A von rechts, also entgegen der Hauptströmungsrichtung 112) auf das Gitter 132 gezeigt. Dabei ist zu erkennen, dass in diesem Ausführungsbeispiel im Wesentlichen jeder der Kreuzungspunkte 136 der Streben 134 mit Aussparungen 156 ausgestattet ist. Wie oben ausgeführt, ist jedoch auch eine andere Ausgestaltung möglich. So kann insbesondere ein Bereich einer Projektion eines Messbereichs eines Sensors auf das Gitter 132 mit derartigen Aussparungen 156 verbunden sein, die übrigen Bereich des Gitters 132 hingegen nicht. Wird zum Beispiels als Sensor 115 ein Heißfilmluftmassenmesser 114 (siehe Figur 1A) verwendet, so kann der Messbereich 164 beispielsweise den Einlass 126 des Heißfilmluftmassenmessers 114 umfassen. Wird dieser Messbereich 164 entlang der Hauptströmungsrichtung 112 auf das Gitter 132 projiziert, so ist es besonders bevorzugt, wenn insbesondere dieser Bereich der Projektion mit derartigen Aussparungen 156 ausgestattet ist.

## Patentansprüche

1. Sensoranordnung (110) zur Bestimmung wenigstens eines Parameters eines mit einer Hauptströmungsrichtung (112) strömenden fluiden Mediums, insbesondere einer durch ein Strömungsrohr strömenden Ansaugluftmasse einer Brennkraftmaschine, wobei die Sensoranordnung (110) mindestens einen in dem fluiden Medium angeordneten Sensor (114, 115) zur Bestimmung des Parameters des fluiden Mediums aufweist, wobei die Sensoranordnung (110) weiterhin mindestens ein quer zur Hauptströmungsrichtung (112) angeordnetes Gitter (132) mit mehreren Streben (134), die sich an Kreuzungspunkten (136) schneiden, umfasst, wobei die Streben (134) eine im Wesentlichen in die Hauptströmungsrichtung (112) gerichtete Strebentiefe (D) aufweisen, **dadurch gekennzeichnet, dass** mindestens eine Strebe (134) mindestens eine Aussparung (156) aufweist, wobei die Strebentiefe (D) in der Aussparung (156) reduziert ist.

2. Sensoranordnung (110) nach dem vorhergehenden Anspruch, wobei die Aussparung (156) an einer bezüglich der Hauptströmungsrichtung (112) stromabwärts angeordneten Hinterkante (140) der mindestens einen Strebe (134) angeordnet ist.

3. Sensoranordnung (110) nach einem der vorhergehenden Ansprüche, wobei die Aussparung (156) eine Aussparungstiefe zwischen 10% und 80% der Strebentiefe (D) aufweist und vorzugsweise eine Aussparungstiefe von 50% der Strebentiefe (D).

4. Sensoranordnung (110) nach einem der vorhergehenden Ansprüche, wobei die Aussparung (156) mindestens eine der folgenden Formen aufweist: ein rechteckiges Profil; ein trapezförmiges Profil, insbesondere ein trapezförmiges Profil mit einem Trapezwinkel zwischen 90° und 30°; ein abgerundetes Profil.

5. Sensoranordnung (110) nach einem der vorhergehenden Ansprüche, wobei die Aussparung (156) an mindestens einer der Streben (134), vorzugsweise an zwei sich an einem Kreuzungspunkt (136) schneidenden Streben (134), im Bereich des Kreuzungspunktes (136) angeordnet ist.

6. Sensoranordnung (110) nach dem vorhergehenden Anspruch, wobei an mindestens einem der Kreuzungspunkte (136) keine Aussparung (156) angeordnet ist und wobei an mindestens einem der Kreuzungspunkte (136) eine Aussparung (156) angeordnet ist.

7. Sensoranordnung (110) nach einem der vorhergehenden Ansprüche, wobei der Sensor (114, 115) mindestens einen Messbereich (164) aufweist, insbesondere einen Einlass eines Messkanals, wobei die Aussparung (156) bezüglich der Hauptströmungsrichtung (112) stromaufwärts des Messbereichs (164) angeordnet ist.

8. Sensoranordnung (110) nach einem der vorhergehenden Ansprüche, wobei die mindestens eine Strebe (134) eine der Hauptströmungsrichtung (112) entgegenweisende Vorderkante (138) und eine hinsichtlich der Hauptströmungsrichtung (112) stromabwärts der Vorderkante (138) angeordnete Hinterkante (140) aufweist, wobei die Vorderkante (138) ein abgerundetes Profil aufweist.

9. Sensoranordnung (110) nach dem vorhergehenden Anspruch, wobei die Hinterkante (140) eine im Wesentlichen senkrecht zur Hauptströmungsrichtung (112) orientierte ebene Fläche aufweist.

10. Strömungsrohrsegment (116) für den Einsatz in einer Sensoranordnung (110) gemäß einem der vorhergehenden Ansprüche, umfassend mindestens ein Gehäuse (118) mit mindestens einer Aufnahme (120) zum Einbringen eines Sensors (114,115) zur Bestimmung wenigstens eines Parameters eines mit einer Hauptströmungsrichtung (112) durch das Strömungsrohrsegment (116) strömenden fluiden Mediums, weiterhin umfassend mindestens ein quer zur Hauptströmungsrichtung (112) angeordnetes Gitter (132) mit mehreren Streben (134), die sich an Kreuzungspunkten (136) schneiden, wobei die Streben (134) eine im Wesentlichen in die Hauptströmungsrichtung (112) gerichtete Strebentiefe (D) aufweisen, **dadurch gekennzeichnet, dass** mindestens eine Strebe (134) mindestens eine Aussparung (156) aufweist, wobei die Strebentiefe (D) in der Aussparung (156) reduziert ist.

## Claims

1. Sensor arrangement (110) for determining at least one parameter of a fluid medium flowing with a main flow direction (112), in particular of an intake air mass flow, flowing through a flow pipe, of an internal combustion engine, wherein the sensor arrangement (110) has at least one sensor (114, 115) which is arranged in the fluid medium and has the purpose of determining the parameter of the fluid medium, wherein the sensor arrangement (110) also comprises at least one grill (132) which is arranged transversely with respect to the main flow direction (112) and has a plurality of struts (134) which intersect at intersection points (136), wherein the struts (134) have a strut depth (D) which is directed essentially in the main flow direction (112), **characterized in that** at least one strut (134) has at least one recess (156), wherein the strut depth (D) is reduced in the recess (156).

2. Sensor arrangement (110) according to the preceding claim, wherein the recess (156) is arranged on a rear edge (140), arranged downstream with respect to the main flow direction (112), of the at least one strut (134).

3. Sensor arrangement (110) according to one of the preceding claims, wherein the recess (156) has a recess depth between 10% and 80% of the strut depth (D), and preferably a recess depth of 50% of the strut depth (D).

4. Sensor arrangement (110) according to one of the preceding claims, wherein the recess (156) is at least in one of the following shapes: a rectangular profile, a trapezoidal profile, in particular a trapezoidal profile with a trapezium angle between 90° and 30°, a rounded profile.

5. Sensor arrangement (110) according to one of the preceding claims, wherein the recess (156) is arranged on at least one of the struts (134), preferably on two struts (134) which intersect at an intersection point (136), in the region of the intersection point (136).

6. Sensor arrangement (110) according to the preceding claim, wherein no recess (156) is arranged at at least one of the intersection points (136), and wherein a recess (156) is arranged at at least one of the intersection points (136).

7. Sensor arrangement (110) according to one of the preceding claims, wherein the sensor (114, 115) has at least one measuring region (164), in particular an inlet of a measuring duct, wherein the recess (156) is arranged upstream of the measuring region (164) with respect to the main flow direction (112).

8. Sensor arrangement (110) according to one of the preceding claims, wherein the at least one strut (134) has a front edge (138) which points in the opposite direction to the main flow direction (112), and a rear edge (140) which is arranged downstream of the front edge (138) with respect to the main flow direction (112), wherein the front edge (138) has a rounded profile.

9. Sensor arrangement (110) according to the preceding claim, wherein the rear edge (140) has a planar surface which is oriented essentially perpendicularly with respect to the main flow direction (112).

10. Flow pipe segment (116) for use in a sensor arrangement (110) according to one of the preceding claims, comprising at least one housing (118) with at least one receptacle (120) for the introduction of a sensor (114, 115) for determining at least one parameter of a fluid medium which flows with a main flow direction (112) through the flow pipe segment (116), further comprising at least one grill (132) which is arranged transversely with respect to the main flow direction (112) and has a plurality of struts (134) which intersect at intersection points (136), wherein the struts (134) have a strut depth (D) which is directed essentially in the main flow direction (112), **characterized in that** at least one strut (134) has at least one recess (156), wherein the strut depth (D) is reduced in the recess (156).

## Revendications

1. Système de détection (110) destiné à déterminer au moins un paramètre d'un fluide qui s'écoule dans une direction principale d'écoulement (112), en particulier de la masse d'air d'admission qui s'écoule dans un tube d'écoulement d'un moteur à combustion interne,
le système de détection (110) présentant au moins un détecteur (114, 115) disposé dans le fluide et destiné à déterminer le paramètre du fluide,
le système de détection (110) comprenant en outre au moins une grille (132) dotée de plusieurs barres (134) qui se croisent en des points de croisement (136) et disposées transversalement par rapport à la direction principale d'écoulement (112), les barres (134) présentant une profondeur (D) orientée essentiellement dans la direction principale d'écoulement (112),
**caractérisé en ce que**
au moins une barre (134) présente au moins une découpe (156), la profondeur (D) de la barre étant réduite dans la découpe (156).

2. Système de détection (110) selon la revendication précédente, dans lequel la découpe (156) est disposée sur le chant arrière (140), disposé en aval dans la direction principale d'écoulement (112), de la ou des barres (134).

3. Système de détection (110) selon l'une des revendications précédentes, dans lequel la découpe (156) présente une profondeur comprise entre 10 % et 80 % de la profondeur (D) de la barre et de préférence une profondeur qui correspond à 50 % de la profondeur (D) de la barre.

4. Système de détection (110) selon l'une des revendications précédentes, dans lequel la découpe (156) présente au moins l'une des formes suivantes : un profil rectangulaire, un profil trapézoïdal et en particulier un profil trapézoïdal dont l'angle du trapèze est compris entre 90° et 30° et un profil arrondi.

5. Système de détection (110) selon l'une des revendications précédentes, dans lequel la découpe (156) est disposée au niveau du point de croisement (136), sur au moins l'une des barres (134), de préférence sur deux barres (134) qui s'intersectent en un point de croisement (136).

6. Système de détection (110) selon la revendication précédente, dans lequel aucune découpe (156) n'est disposée sur au moins l'un des points de croisement (136) et une découpe (156) est disposée en au moins l'un des points de croisement (136).

7. Système de détection (110) selon l'une des revendications précédentes, dans lequel le détecteur (114, 115) présente une zone de mesure (164), en particulier l'admission d'un canal de mesure, la découpe (156) étant disposée en amont de la zone de mesure (164) dans la direction principale d'écoulement (112).

8. Système de détection (110) selon l'une des revendications précédentes, dans lequel la ou les barres (134) présentent un chant avant (138) tourné dans le sens opposé à la direction principale d'écoulement (112) et un chant arrière (140) disposé en aval du chant avant (138) dans la direction principale d'écoulement (112), le chant avant (138) présentant un profil arrondi.

9. Système de détection (110) selon l'une des revendications précédentes, dans lequel le chant arrière (140) présente une surface plane orientée essentiellement à la perpendiculaire de la direction principale d'écoulement (112).

10. Segment (116) de tube d'écoulement destiné à être utilisé dans un système de détection (110) selon l'une des revendications précédentes, comportant au moins un boîtier (118) doté d'au moins un logement (120) qui permet d'installer un détecteur (114, 115) qui détermine au moins un paramètre d'un fluide qui
s'écoule dans le segment tubulaire d'écoulement (116) dans une direction principale d'écoulement (112), et comprenant en outre au moins une grille (132) dotée de plusieurs barres (134) qui se coupent en des points de croisement (136) et disposées transversalement par rapport à la direction principale d'écoulement (112), les barres (134) présentant une profondeur (D) orientée essentiellement dans la direction principale d'écoulement (112),
**caractérisé en ce que**
au moins une barre (134) présente au moins une découpe (156), la profondeur (D) de la barre étant réduite dans la découpe (156).
